(19) Europäisches Patentamt
European Patent Office
Office européen des brevets

(11) Veröffentlichungsnummer : **0 119 382 B1**

(12) # EUROPÄISCHE PATENTSCHRIFT

(45) Veröffentlichungstag der Patentschrift : **28.05.86**

(51) Int. Cl.$^4$ : **C 04 B 30/02**, F 16 L 59/00

(21) Anmeldenummer : **84100091.2**

(22) Anmeldetag : **07.01.84**

(54) **Verfahren zur Herstellung von bindemittelfreien Wärmedämmformkörpern.**

(30) Priorität : **17.02.83 DE 3305375**

(43) Veröffentlichungstag der Anmeldung : **26.09.84 Patentblatt 84/39**

(45) Bekanntmachung des Hinweises auf die Patenterteilung : **28.05.86 Patentblatt 86/22**

(84) Benannte Vertragsstaaten : **AT BE CH DE FR GB IT LI LU NL SE**

(56) Entgegenhaltungen :
**DE-A- 1 646 731**
**FR-A- 1 108 870**
**Die Akte enthält technische Angaben, die nach dem Eingang der Anmeldung eingereicht wurden und die nicht in dieser Patentschrift enthalten sind.**

(73) Patentinhaber : **Degussa Aktiengesellschaft**
**Weissfrauenstrasse 9**
**D-6000 Frankfurt am Main 1 (DE)**

(72) Erfinder : **Gliem, Sabine**
**Fechenheimerstrasse 4**
**D-6000 Frankfurt am Main (DE)**
Erfinder : **Kleinschmit, Peter, Dr.**
**Wildaustrasse 19**
**D-6450 Hanau 9 (DE)**
Erfinder : **Schwarz, Rudolf, Dr.**
**Taunusstrasse 2**
**D-8755 Alzenau-Wasserlos (DE)**

**EP 0 119 382 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von bindemittelfreien Wärmedämmformkörpern aus einem Gemisch aus hochdispersen Kieselsäuren, Trübungsmitteln und anorganischen Fasern.

Wärmedämmformkörper sind beispielsweise aus der US-A 3 055 831, DE-B 16 71 186, DE-A 27 54 956 und DE-A 25 24 096 bekannt. Diese Wärmedämmformkörper zeichnen sich zwar durch ihre hervorragende Dämmwirkung und Temperaturstabilität aus, jedoch entspricht ihre mechanische Festigkeit in einigen Einsatzbereichen nicht den Anforderungen der Bearbeitbarkeit. Diese Wärmedämmformkörper benötigen dann eine zusätzliche Verfestigung bzw. mechanische Stabilisierung.

So ist es aus der DE-B 20 36 124 bekannt, teilchenförmige Isoliermaterialien auf Basis Kieselsäure-Aerogel in eine poröse Hülle aus Flachfasergewebe geringer Durchlässigkeit einzufüllen. Die gefüllte Hülle wird in einer Presse, unter Druckaufbau innerhalb der Hülle zu einer Platte geformt, wobei Luft aus der Hülle herausgedrückt, das Isoliermaterial verdichtet und verfestigt wird und die Teilchen des Isoliermaterials untereinander und mit der Hülle verbunden werden. Die auf diese Weise hergestellten Wärmedämmformkörper entsprechen jedoch aufgrund der textilen Umhüllung in einigen Einsatzbereichen nicht den Anforderungen der Bearbeitbarkeit. Sie lassen sich an Ort und Stelle der Montage nur mit Spezialwerkzeugen zuschneiden, wobei das Kernmaterial des Isolierstoffes aus der Hülle herausbröselt oder ganz aus der Außenhülle herausfällt. Weiterhin ist lediglich die Fertigung von Wärmedämmplatten und nicht die von komplizierten Wärmedämmformteilen mit dieser Umhüllung möglich.

Gemäß US-A 3 055 831 sind handhabungsfähige Wärmedämmplatten aus hochdispersem Wärmedämm-Material, welches mit Mineralfaserwolle und Trübungsmittel in hochfeiner Form vermischt ist bekannt. Bei der Herstellung der bekannten Wärmedämmplatten wird der Mischung ein Bindemittel unter Vermischung zugesetzt, das anschließend durch Wärme oder durch katalytische Reaktion ausgehärtet wird. Die Partikel des Bindemittels müssen dabei eine ähnliche Korngröße wie die Teilchen des Isoliermittels besitzen, so daß deren Korngröße unterhalb 0,1 µm liegen muß. Das Einmischen der Bindemittel ist mit erheblichen Schwierigkeiten behaftet, weil sowohl die feinkörnigen Bindemittelteilchen als auch die Wärmedämmittelteilchen sich beim Mischen sofort zu Sekundär-Agglomeraten zusammenballen und somit eine wirksame Vermischung von Bindemittel und Wärmedämm-Material verhindert wird. Es kommt zu einer uneinheitlich verteilten Bindemittel-Wärmedämm-Material-Mischung. Dadurch werden die mechanischen Eigenschaften der fertigen Formteile nachteilig beeinflußt. Da nur bestimmte Wärmedämm-Materialverbände durch das Bindemittel-Agglomerat zusammengehalten werden, neigt das durch den Aushärtungsprozeß entstandene Produkt zu brechen.

Aus der DE-A 27 48 307 ist eine Wärmedämmplatte bekannt, die im Kern aus einem Gemisch von pyrogener Kieselsäure, Trübungsmitteln und ggf. Mineralfasern besteht und als Umhüllung dieses Kerns eine Schicht aus Mineralfasern mit Füllstoffen und anorganischem Bindemittel aufweist. Die relativ grobkörnigen Füllstoffe der äußeren Schicht werden mit Wasserglas als Bindemittel ausgehärtet. Diese Art der Bindemittelbehandlung führt jedoch nur zu einem beschränkten Schutz des Kerns des Wärmedämmaterials, da die relativ grobe Deckschicht auch im ausgehärteten Zustand nicht abriebbeständig ist und somit die mechanische Festigkeit der Wärmedämmformteile durch die Aushärtung nicht im erwarteten Maße gesteigert wird.

Aus der EP-A 48 947 A 1 und DE-A 29 42 087 sind Wärmedämmstoffe, die durch homogenes oder inhomogenes Einmischen eines Binders in den Wärmedämmstoff und anschließende thermische Behandlung ausgehärtet sind, bekannt.

Bei den bekannten Wärmedämmformkörpern zeigen nun Wärmedämmformkörper, die ohne Bindemittel aus anorganischen hochdispersem Wärmedämmstoff gepreßt werden, die entsprechend der Qualität des Wärmedämmaterials besten Wärmedämmeigenschaften.

Bindemittelfreie Wärmedämmformkörper zeigen nach dem Pressvorgang eine nachteilige übergrosse Volumenexpansion. Sie werden rissig und die mechanische Stabilität ist herabgesetzt. Außerdem ist die Fertigung von kompliziert gestalteten, maßgenauen Wärmedämmformkörpern aufgrund der schlechten Maßhaltigkeit äußerst schwierig.

Aufgabe der Erfindung ist es, einen Wärmedämmformkörper mit verbesserten mechanischen Eigenschaften und Verarbeitungseigenschaften zu entwickeln, der den Belastungen höherer Temperaturen standhalten und darüber hinaus Wärmedämmeigenschaften aufweisen kann, die denen bindemittelfreier Wärmedämmstoffe gleichkommen.

Gegenstand der Erfindung ist ein Verfahren zur Herstellung von bindemittelfreien Wärmedämmformkörpern unter Verwendung von hochdispersen Oxiden von Metallen und/oder Metalloiden, Trübungsmitteln und anorganischen Fasern als Wärmedämmaterial, welches dadurch gekennzeichnet ist, daß man das hochdisperse Oxid von Metallen und/oder Metalloiden, Trübungsmittel und anorganische Fasern in Gegenwart von stickstoffhaltigen, in wässriger Lösung basisch reagierenden Stoffen vermischt und diese Wärmedämmaterial-Mischung anschliessend verpreßt. In einer bevorzugten Ausführungsform der Erfindung kann man den stickstoffhaltigen Stoff in Form einer wässrigen Lösung verwenden.

Als Wärmedämm-Material werden im Rahmen der Erfindung Mischungen eingesetzt, die ca. 40 bis 70 Gew.-% hochdisperse Oxide von Metallen und/oder Metalloiden wie hochdisperse Kieselsäure, wie z. B. pyrogen hergestelltes Siliciumdioxid sowie Mischoxid mit Aluminiumoxid, Titandioxid und Zirkonoxid oder alkalifreie Fällungskieselsäure, 20 bis 50 Gew.-% Trübungsmittel. z. B. Quarzmehl, Rutil oder Ilmenit und 1 bis 10 Gew.-% einer hochtemperaturbeständigen Faser, z. B. Aluminiumsilikat, zur Erhöhung der Stabilität, erhalten.

Die in wässriger Lösung basisch reagierenden, stickstoffhaltigen Stoffe können in Gasform z. B. Ammoniakgas, der Wärmedämmaterial-Mischung zugesetzt werden. Von Vorteil kann es sein, wenn dabei die Wärmedämmaterial-Mischung aus der Luft absorbierte Feuchtigkeit, enthält. In einer Ausführungsform der Erfindung können die basisch reagierenden stickstoffhaltigen Stoffe, wie z. B. das Ammoniakgas im Gemisch mit Wasserdampf eingesetzt werden.

Wesentlich ist jedoch, daß der Zusatz des stickstoffhaltigen, in wässriger Lösung basisch reagierenden Stoffes vor dem Verpressen geschieht.

Wird beispielsweise gasförmiges Ammoniak nach dem Verpressen dem Wärmedämmformkörper zugesetzt, so wird das Ausmaß der Expansion nicht verbessert, weil diese schon abgeschlossen ist. Es kann nur noch die Biegefestigkeit erhöht werden.

Während dem Mischvorgang kann dem Wärmedämmaterial Wasser, das eine oder mehrere basisch reagierende Verbindungen, wie z. B. Ammoniak, Ammoniumcarbonat, Harnstoff oder wasserlösliche Amine enthält, zugesetzt werden.

Verwendet man als stickstoffhaltige Verbindung Harnstoff oder Ammoniumcarbonat, kann eine Nachtemperung nach dem Verpessen des Wärmedämmformkörpers bei Temperaturen von 100 bis 150 °C sinnvoll sein.

Andere basisch reagierende Verbindungen, wie z. B. Kaliumhydroxid, Natriumhydroxid, Alkaliwasserglas usw. führen zwar ebenfalls zu den gewünschten Verbesserungen der mechanischen Stabilitätseigenschaften und zu Verbesserungen der Verarbeitungseigenschaften, jedoch wird die Qualität des Wärmedämmaterials erheblich durch verminderte thermische Stabilität und Isolierwirkung verschlechtert.

Eine gute Benetzung des Wärmedämmaterials während des Mischens kann erreicht werden, wenn man bezogen auf die gesamte Wärmedämmaterial-Mischung 3 bis 7 Gew.-% wässrige Lösung, welche basisch reagierende Verbindungen beliebiger, vorzugsweise möglichst hoher Konzentration enthält, unter gleichmäßiger Verteilung in die Wärmedämmaterial-Mischung einarbeitet. Da das eingearbeitete Wasser zum größten Teil wieder weggetrocknet werden muß, wird aus wirtschaftlichen Gründen eine möglichst geringe Wassermenge angewandt. Die erforderliche Menge hängt in gewissem Umfang von der Art der Einarbeitung ab. Die gleichmäßige Verteilung der Lösung, die basisch reagierende Verbindungen enthält, in der Wärmedämmaterial-Mischung kann durch Einsprühen in die mischend bewegte Wärmedämmaterial-Mischung bei Temperaturen zwischen 20 und 100°, vorzugsweise bei 40 bis 50 °C, vorgenommen werden. Es hat sich ferner als vorteilhaft erwiesen, die Einbringung des Wassers, das basisch reagierende Verbindungen enthält, bei mäßig erhöhten Temperaturen durchzuführen. Dies kann geschehen, indem man entweder die einzuarbeitende Flüssigkeit oder die Wärmedämmaterial-Mischung oder beide Komponenten vorerwärmt. Man kann die Umsetzung auch durch kurzzeitige Erhitzung des besprühten Wärmedämmaterials in einem abgeschlossenen Raum unter autogenem Druck fördern.

Erfindungsgemäß kann die Trocknung der durch Verpressen der Wärmedämmaterial-Mischung erhaltenen Wärmedämmformkörper auch bei Raumtemperatur erfolgen.

Erfolgt eine Trocknung der Wärmedämmaterial-Mischung vor dem Pressen und vor der Zugabe von z. B. gasförmigen Ammoniak, so tritt der gewünschte Effekt der Expansionsverminderung nicht ein.

Die Verbesserung der mechanischen Stabilität stellt sich während dem Pressvorgang ein. Die Druck- und Biegefestigkeit der Wärmedämmformkörper wird erheblich verbessert. Die unbehandelten bekannten Wärmedämmformkörper besitzen nach dem Pressvorgang eine Expansion des Volumens. Die erfindungsgemäß behandelten Wärmedämmaterial-Mischungen zeigen nach dem Pressvorgang keine oder vergleichsweise zum Stand der Technik nur eine geringfügige Expansion der Wärmedämmformkörper.

Ein wesentlicher Vorteil ist dabei, daß die erfindungsgemäß hergestellten Wärmedämmformkörper eine reproduzierbar einstellbare Expansion aufweisen.

Es bietet sich nun an, aufgrund der guten Maßhaltigkeit kompliziert gestaltete Wärmedämmformkörper mit Einprägung durch Verwendung eines entsprechenden Preßstempels durch Verdichten bzw. Verpessen herzustellen. Die Wärmedämmwirkung und Temperaturstabilität der erfindungsgemäßen Wärmedämmformkörper wird unwensentlich beeinträchtigt. Bei entsprechenden Wärmedämmformkörpern nach dem Stand der Technik ist eine Reproduzierbarkeit nicht gegeben.

## Beispiele

Wesentliches Beurteilungskriterium der Qualität der Wärmedämmformkörper ist die Expansion der Wärmedämmformkörper nach dem Pressvorgang, die mechanische Stabilität (Biegefestigkeit), die Wärmeleitfähigkeit und die thermische Formfestigkeit. Die Prüfung erfolgt an runden Wärmedämmplatten mit den Abmessungen Ø 100 × 20 mm. Die Wärmedämmplatten werden den folgenden Prüfmethoden unterzogen :

1. Wärmeleitfähigkeitsmessung in W/m °C, (Watt pro Meter °Celsius)
2. Schrumpfung des Wärmedämmplattendurchmessers in % bei 1 000 °C und einer Haltezeit von 10 h.

3. Relative Biegefestigkeit in Newton, wobei die Wärmedämmplatten als Balken auf zwei Stützen gelagert und durch die Einzellast P in der Mitte beansprucht werden. Dabei sind wie in der Figur 1 dargestellt wird :

P = Einzellast in Newton (vgl. Tabelle)
$L_1$ = Probenlänge von 100 mm
h = Probenhöhe von 20 mm
$L_2$ = Stützweite von 40 mm

Die Probe wird durch gleichmäßige Steigerung der Belastung stoßfrei gebogen. In den Beispielen wird ein Vorschub der Einzellast von 5 mm/min gewählt. Die Relativwerte für die Belastbarkeit für die entsprechenden Proben werden in Newton angegeben.

Vergleichsbeispiele A

Man stellt in einem schnellaufenden Mischgerät mit ca. 5 000 UpM aus 63 Gew.-% einer pyrogenen Kieselsäure mit einer BET-Oberfläche von 300 $m^2/g$, 30 Gew.-% eines feinteiligen Trübungsmittels (Rutil) und 7 Gew.-% einer keramischen Faser auf Basis Aluminiumsilikat (60 Gew.-% $Al_2O_3$-Anteil) eine homogene Wärmedämmaterial-Mischung von insgesamt 300 g, her. Die Wärmedämmaterial-Mischung wird zu Platten mit einem Litergewicht von 300 g/l verpreßt und für die Beispiele 1 bis 4 als Vergleich verwendet.

Beispiel 1 (Vergleichsbeispiel)

Es werden 300 g einer Wärmedämmaterial-Mischung gemäß Vergleichsbeispiel A mit zusätzlich 15 g Wasser während dem Mischvorgang besprüht. Die Herstellung, Zusammensetzung und Weiterverarbeitung der Dämmstoffmischung erfolgt wie im Vergleichsbeispiel A beschrieben. Die Expansion der Platten nach dem Pressvorgang (10 Min.) wird zwar gegenüber dem Vergleichsbeispiel A geringfügig verringert jedoch wird bei der Biegefestigkeit keine deutliche Verbesserung erreicht.

Beispiele 2 bis 4

Es werden jeweils 300 g einer Wärmedämmaterial-Mischung mit jeweils 15 g 5, 15 und 25 %iger wässriger Ammoniaklösung während dem Mischvorgang besprüht und Platten mit einem Litergewicht von 300 g hergestellt. Die Expansion der Platten nach dem Pressvorgang (10 Min.) konnte bei gleichzeitiger Verbesserung der Biegefestigkeit, unwesentlicher Änderung der Isolierwirkung und Erhalt der thermischen Stabilität erheblich verringert werden.

In der Tabelle 1 sind die Meßergebnisse des Vergleichsbeispiels A und der Beispiele 1 bis 4 aufgeführt. Gemäß Tabelle 1 wird beispielsweise die Biegefestigkeit bei Verwendung von 15 g 25 % $NH_3$-Lösung um 50 % verbessert. Die Schrumpfung weist keine Verschlechterung auf, d. h., diese Mischungen können bis zu einer Temperatur von 950 °C eingesetzt werden.

In der Tabelle 2 sind die Wärmeleitfähigkeiten in Abhängigkeit von den Mitteltemperaturen für das Vergleichsbeispiel A und die Beispiele 2 bis 4 aufgeführt. Die erfindungsgemäß erhaltenen Wärmedämmformkörper weisen keine Risse oder Fugen auf, weil die Expansion sehr gering ist.

Beispiel 5

Es werden 300 g einer Wärmedämmaterial-Mischung entsprechend dem Vergleichsbeispiel A hergestellt und zusätzlich mit 5 g bzw. 10 g 25 %iger Ammoniaklösung während dem Mischvorgang besprüht. Die Expansion der Platten beträgt nach dem Pressvorgang nur noch 2,5 %. Die Biegefestigkeit konnte bei gleichzeitigem Erhalt der Isolierwirkung und thermischen Stabilität um ca. 40 % gesteigert werden.

Beispiel 6

Es werden 300 g einer Wärmedämmaterial-Mischung entsprechend dem Vergleichsbeispiel A hergestellt und zusätzlich mit 5 g 25 %iger Ammoniaklösung während dem Mischvorgang besprüht. Die Mengen an aufzutragender wässriger Ammoniaklösung ist im Verhältnis zu der Gesamtmischung so gering, daß man keine homogene Vermischung erhält. Die Untersuchung des Expansionsverhaltens und der Biegefestigkeit ergibt unterschiedliche Ergebnisse.

(Siehe Tabellen Seite 5 ff.)

Tabelle 1

| Beispiel | Behandlung | $NH_3$-Gehalt der Lösung % | G% $NH_3$ bez. auf A300 | Press-druck* bar 10Min. | Expan-sion % | Biegefestigkeit N | Standard-abweichg. | Schrumpfung (%) bei 1000°C (Durchm.) d | (Höhe) h | (Volumen) V |
|---|---|---|---|---|---|---|---|---|---|---|
| 63 % A 300 | | | | | | | | | | |
| 30 % Rutil | keine | - | | 14,5 | 9,5 | 110 | | 3,5 % | 8,5 % | 14,75 % |
| 7 % Kaowool® | | | | 14,5 | 9,2 | 121 | | | | |
| (300 g) | | | | 14,5 | 10,2 | 102 | 114,3 ± 8,6 | | | |
| | | | | 14,5 | 9,2 | 123 | 100% | | | |
| A | | | | 14,5 | 9,7 | 114 | | | | |
| 63 % A 300 | Mischung | - | | 13 | 7,9 | 114 | | 3,5 % | 9,1 % | 15,5 % |
| 30 % Rutil | wurde mit | | | 13 | 6,3 | 141 | | | | |
| 7 % Kaowool® | 15 g Wasser be- | | | 13 | 7,9 | 123 | 124,0 ± 11,0 | | | |
| | sprüht | | | 13 | 7,3 | 124 | | | | |
| (300 g) 1 | | | | 13 | 7,9 | 115 | 109 % | | | |
| 63 % A 300 | mit 15g wäß- | | 0,4 | 11 | 2,5 | 153,1 | 162,3 ± 13,1 | 3,6 % | 9,4 % | 15,8 % |
| 30 % Rutil | riger Ammo- | | | 11 | 2,5 | 162,9 | | | | |
| 7 % Kaowool® | niaklsg. be-besprüht | 5 | | 11 | 2,5 | 157,8 | 142 % | | | |
| | | | | 11 | 2,5 | 153,3 | | | | |
| (300 g) 2 | | | | 11 | 2,5 | 184,6 | | | | |

* Der unterschiedliche Preßdruck ergibt sich daraus, daß Wärmedämmplatten mit einer Dichte von 300 g/l hergestellt werden, um vergleichbare Ergebnisse zu erhalten.

Tabelle 1 (Fortsetzung)

| Beispiel | Behandlung | $NH_3$-Gehalt der Lösung % | G% $NH_3$ bez. auf A 300 | Pressdruck bar 10 Min. | Expansion % | Biegefestigkeit N | Standardabweichg. | Schrumpfung (%) bei 1000°C (Durchm.) d | (Höhe) h | (Volumen) V |
|---|---|---|---|---|---|---|---|---|---|---|
| 63 % A 300 | dto. | | 1,2 | 11 | 2,5 | 159 | 161,2±11,2 | 3,5 % | 8,4 % | 14,7 % |
| 30 % Rutil | | 15 | | 11 | 2,5 | 167 | | | | |
| 7 % Kaowool® | | | | 11 | 2,5 | 159 | 141 % | | | |
| (300 g)$_3$ | | | | 11 | 2,5 | 145 | | | | |
| | | | | 11 | 2,5 | 175 | | | | |
| 63 % A 300 | dto. | 25 | 2,0 | 11 | 2 | 194 | 170,9±17,0 | 3,4 % | 7,8 % | 14 % |
| 30 % Rutil | | | | 11 | 2 | 178 | 150 % | | | |
| 7 % Kaowool® | | | | 11 | 2 | 173 | | | | |
| | | | | 11 | 2 | 160 | | | | |
| (300 g)$_4$ | | | | 11 | 2 | 150 | | | | |
| Bsp. 5 | mit 10 g wässriger $NH_3$-Lösung besprüht | 25 | 1,3 | 11 | 2,5 | 157 | | | | |
| | | | | 11 | 2,5 | 163 | 159,8±6,1 | 3,2 % | 7,9 % | 14,0 % |
| | | | | 11 | 2,5 | 159 | | | | |
| | | | | 11 | 2,5 | 152 | 140 % | | | |
| | | | | 11 | 2,5 | 168 | | | | |
| Bsp. 6 | mit 5 g wässriger $NH_3$-Lösung besprüht | 25 | 0,65 | 11 | 5,0 | 142 | 154,4±13,3 | 3,4 % | 7,8 % | 14,0 % |
| | | | | 11 | 3,0 | 161 | | | | |
| | | | | 11 | 5,0 | 140 | | | | |
| | | | | 11 | 4,0 | 158 | | | | |
| | | | | 11 | 3,0 | 171 | | | | |

Tabelle 2

Wärmeleitfähigkeit im Bereich 20 bis 1 000 °C von Vergleichsmischung A

| Aussentemp. °C | Innentemp. °C | Mittl.Temp. °C | REL.WLF W/K | Absol.WLF. W/M*K | Z-BE HHMMSS |
|---|---|---|---|---|---|
| 22 | 78 | 50 | 0208 | 0277 | 003729 |
| 22 | 209 | 115 | 018 | 024 | 002808 |
| 23 | 306 | 165 | 0176 | 0235 | 002254 |
| 25 | 402 | 214 | 0171 | 0229 | 002141 |
| 26 | 499 | 263 | 0169 | 0225 | 002114 |
| 28 | 595 | 311 | 017 | 0227 | 002103 |
| 31 | 689 | 360 | 0178 | 0237 | 002611 |
| 34 | 788 | 411 | 0191 | 0255 | 002530 |
| 37 | 887 | 462 | 0203 | 027 | 001959 |
| 41 | 983 | 512 | 0219 | 0292 | 002535 |
| 45 | 913 | 479 | 0203 | 0271 | 004031 |
| 46 | 812 | 429 | 0176 | 0235 | 002503 |
| 45 | 721 | 383 | 0173 | 0231 | 034743 |
| 43 | 616 | 330 | 016 | 0213 | 003453 |
| 41 | 518 | 280 | 0148 | 0198 | 003942 |
| 37 | 420 | 229 | 0139 | 0186 | 004850 |
| 33 | 322 | 178 | 013 | 0174 | 010348 |
| 28 | 233 | 120 | 0138 | 0184 | 020050 |
| 24 | 80 | 57 | 0135 | 018 | 033918 |

Die graphische Darstellung dieser Werte zeigt Figur 2

Wärmeleitfähigkeit im Bereich 20 bis 1 000 °C von Beispiel 2 (mit 5 %iger Ammoniaklösung besprüht).

| Aussentemp. °C | Innentemp. °C | Mittl.Temp. °C | Rel.WLF W/K | ABSOL.WLF W/M*K | Z-BE HHMMSS |
|---|---|---|---|---|---|
| 20 | 74 | 47 | 035 | 0467 | 001035 |
| 20 | 211 | 116 | 0263 | 0351 | 001701 |
| 22 | 308 | 165 | 0236 | 0315 | 001250 |
| 25 | 407 | 216 | 0201 | 0268 | 003356 |
| 70 | 499 | 285 | 0218 | 029 | 001902 |
| 36 | 606 | 321 | 0194 | 0258 | 003013 |
| 42 | 688 | 365 | 0200 | 0277 | 010817 |
| 43 | 791 | 417 | 0221 | 0295 | 001841 |
| 46 | 887 | 466 | 0232 | 031 | 001851 |
| 49 | 981 | 515 | 0248 | 0331 | 002435 |
| 52 | 904 | 478 | 0231 | 0309 | 003605 |
| 53 | 811 | 432 | 0206 | 0275 | 002629 |
| 54 | 711 | 382 | 0192 | 0256 | 003537 |
| 50 | 612 | 331 | 0184 | 0245 | 004435 |
| 46 | 519 | 283 | 0177 | 0236 | 003417 |
| 43 | 421 | 232 | 0167 | 0223 | 004359 |
| 37 | 325 | 181 | 0169 | 0225 | 010242 |
| 31 | 226 | 129 | 0158 | 0211 | 012346 |
| 23 | 89 | 56 | 0134 | 0179 | 031502 |

Die graphische Darstellung dieser Werte zeigt Figur 3

Wärmeleitfähigkeit im Bereich 20 bis 1 000 °C von Beispiel 3 (mit 15 %iger Ammoniaklösung besprüht).

| Aussentemp. °C | Innentemp. °C | Mittl.Temp. °C | REL.WLF W/K | ABSOl.WLF. W/M*K | Z-BE HHMMSS |
|---|---|---|---|---|---|
| 20 | 91 | 56 | 0227 | 0371 | 001334 |
| 21 | 212 | 117 | 0199 | 0266 | 003735 |
| 23 | 305 | 164 | 0195 | 0261 | 002117 |
| 25 | 401 | 213 | 0194 | 0259 | 002044 |
| 27 | 496 | 262 | 0195 | 0261 | 002500 |
| 30 | 593 | 312 | 0203 | 0271 | 002454 |
| 33 | 692 | 362 | 0209 | 0279 | 001902 |
| 37 | 786 | 411 | 0218 | 0291 | 002405 |
| 42 | 884 | 463 | 0233 | 0311 | 002425 |
| 47 | 982 | 515 | 0252 | 0336 | 002422 |
| 52 | 984 | 478 | 0228 | 0304 | 003102 |
| 54 | 806 | 430 | 0219 | 0292 | 004122 |
| 54 | 714 | 384 | 0196 | 0261 | 002355 |
| 52 | 614 | 333 | 0189 | 0252 | 003942 |
| 49 | 517 | 283 | 0174 | 0232 | 003935 |
| 44 | 419 | 231 | 0169 | 0226 | 005301 |
| 41 | 323 | 182 | 0156 | 0200 | 005546 |
| 34 | 225 | 129 | 0141 | 0188 | 012003 |
| 24 | 98 | 57 | 0153 | 0204 | 032307 |

Die graphische Darstellung dieser Werte zeigt Figur 4.

Wärmeleitfähigkeit im Bereich 20 bis 1 000 °C von Beispiel 4 (mit 25 %iger Ammoniaklösung besprüht)

| Aussentemp. °C | Innentemp. °C | Mittl.Temp. °C | REL.WLF W/K | ABSOL.WLF. W/M*K | Z-BE HHMMSS |
|---|---|---|---|---|---|
| 24 | 79 | 51 | 0186 | 0248 | 004001 |
| 24 | 207 | 115 | 0174 | 0232 | 002947 |
| 25 | 304 | 164 | 0171 | 0228 | 002321 |
| 27 | 400 | 213 | 018 | 024 | 002736 |
| 29 | 498 | 264 | 0188 | 0251 | 002022 |
| 31 | 596 | 313 | 0196 | 0262 | 001935 |
| 33 | 693 | 363 | 0209 | 0278 | 002412 |
| 36 | 791 | 413 | 022 | 0293 | 001834 |
| 39 | 887 | 463 | 0231 | 0308 | 001848 |
| 44 | 983 | 513 | 0247 | 0329 | 002425 |
| 47 | 909 | 478 | 0216 | 0288 | 002117 |
| 49 | 813 | 431 | 0201 | 0269 | 002222 |
| 49 | 714 | 381 | 0181 | 0242 | 002633 |
| 46 | 611 | 328 | 0179 | 0239 | 004540 |
| 42 | 516 | 279 | 0166 | 0221 | 004439 |
| 38 | 418 | 228 | 016 | 0213 | 005318 |
| 34 | 322 | 178 | 0138 | 0184 | 005726 |
| 29 | 223 | 126 | 0139 | 0186 | 012912 |
| 23 | 89 | 56 | 0116 | 0154 | 031023 |

Die graphische Darstellung dieser Werte zeigt Figur 5.

Wärmeleitfähigkeit im Bereich 20 bis 1 000 °C von Vergleichsbeispiel A (mit 10 g 25 %iger Ammoniaklösung besprüht)

| Aussentemp. °C | Innentemp. °C | Mittl.Temp. °C | REL.WLF. W/K | ABSOL.WLF. W/M*K | Z-BE HHMMSS |
|---|---|---|---|---|---|
| 22 | 81 | 52 | 0176 | 0235 | 004218 |
| 23 | 210 | 116 | 0161 | 0215 | 003035 |
| 25 | 306 | 165 | 0165 | 0221 | 002923 |
| 26 | 403 | 215 | 0168 | 0224 | 002250 |
| 28 | 497 | 263 | 0174 | 0232 | 002715 |
| 31 | 594 | 313 | 0184 | 0246 | 002634 |
| 34 | 692 | 363 | 0197 | 0263 | 002535 |
| 37 | 791 | 414 | 0213 | 0284 | 002446 |
| 41 | 890 | 465 | 0229 | 0304 | 001912 |
| 45 | 986 | 515 | 0244 | 0326 | 001925 |
| 48 | 908 | 478 | 0214 | 0286 | 002222 |
| 50 | 811 | 431 | 0195 | 0261 | 002321 |
| 49 | 706 | 378 | 019 | 0254 | 004737 |
| 46 | 613 | 329 | 0174 | 0232 | 004016 |
| 42 | 515 | 279 | 0169 | 0225 | 005253 |
| 39 | 420 | 230 | 0149 | 0199 | 004729 |
| 35 | 322 | 178 | 0127 | 017 | 010248 |
| 29 | 222 | 125 | 0132 | 0176 | 012833 |
| 24 | 89 | 56 | 0119 | 0159 | 031753 |

Die graphische Darstellung dieser Werte zeigt Figur 6.

Wärmeleitfähigkeit im Bereich 20 bis 1 000 °C von Vergleichsbeispiel A (mit 5 g 25 %iger Ammoniaklösung besprüht).

| Aussentemp. °C | Innentemp. °C | Mittl.Temp. °C | REL.WLF. W/K | ABSOL.WLF. W/M*K | Z-BE HHMMSS |
|---|---|---|---|---|---|
| 23 | 78 | 50 | 0185 | 0247 | 004211 |
| 22 | 207 | 115 | 017 | 0226 | 003056 |
| 24 | 305 | 164 | 0168 | 0224 | 002335 |
| 26 | 400 | 213 | 0173 | 023 | 002706 |
| 28 | 498 | 263 | 0176 | 0235 | 002033 |
| 30 | 594 | 312 | 0187 | 0249 | 002526 |
| 32 | 694 | 363 | 0198 | 0264 | 001932 |
| 35 | 790 | 412 | 0207 | 0276 | 001908 |
| 39 | 885 | 462 | 0219 | 0292 | 002452 |
| 43 | 981 | 512 | 0234 | 0312 | 002520 |
| 47 | 907 | 477 | 0208 | 0278 | 002644 |
| 49 | 813 | 431 | 0193 | 0257 | 002327 |
| 49 | 714 | 382 | 0176 | 0235 | 002810 |
| 46 | 612 | 329 | 0173 | 023 | 004730 |
| 42 | 516 | 279 | 0161 | 0214 | 004625 |
| 38 | 418 | 228 | 0153 | 0205 | 005342 |
| 35 | 321 | 178 | 0146 | 0195 | 010042 |
| 30 | 224 | 127 | 0137 | 0183 | 012257 |
| 23 | 89 | 56 | 0133 | 0178 | 032643 |

Die graphische Darstellung dieser Werte zeigt Figur 7.

Vergleichsbeispiel B

Es werden 300 g einer Wärmedämmaterial-Mischung entsprechend dem Vergleichsbeispiel A hergestellt. Die Mischung wird bei konstantem Druck aber mit verschiedenen Presszeiten zu Platten von 300 g/l verpreßt und die Expansion der Platten nach dem Pressvorgang gemessen.

Die Expansion der Platten stabilisiert sich, wenn man den Pressvorgang mindestens 4 bis 5 Minuten bei konstantem Druck beibehält. Eine weitere Änderung der Presszeit ergibt keine weitere Verbesserung des Expansionsverhaltens. Nach dem Pressvorgang erhöht sich die Expansion der Platten in Abhängigkeit von der Zeit durchschnittlich nochmals um 3 %, gemessen nach 1 Stunde. Die endgültige Messung wurde, um sicherzugehen, daß der Expansionsprozeß der Platten abgeschlossen ist, nach 12 Stunden vorgenommen.

Beispiel 7

Es werden 300 g einer Wärmedämmaterial-Mischung entsprechend dem Vergleichsbeispiel A hergestellt und zusätzlich mit 15 g 25 %iger wässriger Ammoniaklösung während dem Mischvorgang besprüht. Die Mischung wird bei konstantem Druck aber mit verschiedenen Presszeiten zu Platten entsprechend dem Vergleichsbeispiel B verpreßt und die Expansion der Platten nach dem Pressvorgang gemessen. Die Expansion der Platten stabilisiert sich, wie im Vergleichsbeispiel B, wenn man den Pressvorgang mindestens 4 bis 5 Minuten bei konstantem Druck beibehält. Die Expansion beträgt jedoch nur noch 1,5 %, gegenüber 9,5 % der unbehandelten Wärmedämmaterial-Mischung wie im Vergleichsbeispiel B beschrieben. Die Expansion der Platten stellt sich unmittelbar nach dem Pressvorgang ein und verändert sich nicht mehr in Abhängigkeit von der Zeit. D. h., der günstige Expansionswert wird bei der $NH_3$-Behandlung schon nach wesentlich kürzeren Preßzeiten erreicht.

In der Tabelle 3 sind die Meßergebnisse und im Schaubild 1 die Expansion der Platten in Abhängigkeit von der Presszeit für das Vergleichsbeispiel B und das Beispiel 7 aufgeführt.

Tabelle 3 : Expansion der Wärme-Dämmstoffplatten in Abhängigkeit von der Presszeit

| Beispiel | Behandlung | Lösung $NH_3$%ig | Pressdruck bar | Presszeit min | Expansion % | Biegefestigkeit N | Standardabweichung |
|---|---|---|---|---|---|---|---|
| 63 % A 300 | unbehand. | – | 14,5 | 0 | 16,0 | 116,9 | |
| 30 % Rutil | | | 14,5 | 2 | 12,0 | 121,6 | |
| 7 % Kaowool® | | | 14,5 | 4 | 10,0 | 144,1 | 131,7 ± 12,6 |
| | | | 14,5 | 6 | 9,5 | 144,3 | |
| B | | | 14,5 | 8 | 9,5 | 131,6 | |
| | | | 14,5 | 10 | 9,5 | | |
| 63 % A 300 | mit 15g wäßriger Ammoniaklösung besprüht | 25 | 11 | 0 | 7,0 | 193,7 | |
| 30 % Rutil | | | 11 | 2 | 3,0 | 192,2 | |
| 7 % Kaowool® | | | 11 | 4 | 1,5 | 176,3 | 181,7 ± 14,0 |
| | | | 11 | 6 | 1,5 | 186,6 | |
| 7 | | | 11 | 8 | 1,5 | 159,7 | |

## Vergleichsbeispiel C

Man stellt in einem schnellaufenden Mischgerät mit ca. 5 000 UpM aus 63 Gew.-% einer pyrogenen Kieselsäure mit einer BET-Oberfläche von 380 $m^2/g$, 30 Gew.-% eines feinteiligen Trübungsmittels (Rutil) und 7 Gew.-% einer keramischen Faser auf Basis Aluminiumsilikat (60 Gew.-% $Al_2O_3$-Anteil) eine homogene Mischung her. Die Mischung wird bei konstantem Druck aber mit verschiedenen Presszeiten zu Platten verpreßt und die Expansion der Platten nach dem Pressvorgang gemessen. Die Expansion der Platten stabilisiert sich, wenn man den Pressvorgang mindestens 2 min bei konstantem Druck beibehält. Eine weitere Änderung der Presszeit ergibt keine weitere Verbesserung des Expansionsverhaltens.

Nach dem Pressvorgang erhöht sich die Expansion der Platten in Abhängigkeit von der Zeit durchschnittlich nochmals um 2,5 %, gemessen nach 1 Stunde. Die endgültige Messung wurde nach 12 Stunden vorgenommen, um sicher zu gehen, daß der Expansionsprozeß der Platten abgeschlossen ist.

## Beispiel 8

Es werden 300 g einer Wärmedämmaterial-Mischung entsprechend dem Vergleichsbeispiel C hergestellt und zusätzlich mit 15 g 25 %iger wässriger Ammoniaklösung während dem Mischvorgang besprüht. Die Mischung wird bei konstantem Druck aber mit verschiedenen Presszeiten zu Platten verpreßt und die Expansion der Platten nach dem Pressvorgang gemessen. Die Expansion der Platten stabilisiert sich, wenn man den Pressvorgang mindestens 2 min bei konstantem Druck beibehält. Eine weitere Änderung der Presszeit ergibt keine weitere Verbesserung des Expansionsverhaltens. Die Expansion beträgt jedoch nur noch 1,5 % gegenüber 6 % der unbehandelten Wärmedämmaterial-Mischung im Vergleichsbeispiel C beschrieben.

Die Expansion der Platten stellt sich unmittelbar nach dem Pressvorgang ein und verändert sich nicht mehr in Abhängigkeit von der Zeit.

In der Tabelle 4 sind die Meßergebnisse und in Figuren 8 und 9 die Expansion der Platten in Abhängigkeit von der Presszeit für das Vergleichsbeispiel C und das Beispiel 8 aufgeführt.

Tabelle 4 : Expansion der Wärme-Dämmstoffplatten in Abhängigkeit von der Presszeit

| Beispiel | Behandlung | Lösung $NH_3$%ig | Pressdruck bar | Presszeit min | Expansion % | Biegefestigkeit N | Standardabweichung |
|---|---|---|---|---|---|---|---|
| 63 % A 380 | unbehandelt | - | 13,5 | 0 | 13,5 | 119,1 | |
| 30 % Rutil | | | 13,5 | 2 | 7,0 | 128,7 | |
| 7 % Kaowool® | | | 13,5 | 4 | 6,0 | 124,3 | 122,3 ± 6,8 |
| C | | | 13,5 | 6 | 6,0 | 112,1 | |
| | | | 13,5 | 8 | 6,0 | 127,5 | |
| | | | 13,5 | 10 | 5,5 | | |
| 63 % A 380 | mit 15 g wäß-riger Ammoniak- | 25 | 11 | 0 | 6,5 | 166,8 | |
| 30 % Rutil | lösung besprüht | | 11 | 2 | 1,5 | 190,8 | |
| 7 % Kaowool® | | | 11 | 4 | 1,5 | 177,0 | 184,3 ± 15,3 |
| (300 g) | | | 11 | 6 | 1,5 | 206,9 | |
| 8 | | | 11 | 8 | 1,0 | 180,0 | |

## Vergleichsbeispiel D

Man stellt eine Wärmedämmaterial-Mischung entsprechend dem Beispiel C her. Die Mischung wird bei konstantem Druck und einer konstanten Presszeit von 10 min zu Platten verpreßt und für das Beispiel 9 als Vergleich verwendet.

## Beispiel 9

Es werden 300 g Wärmedämmaterial-Mischung gemäß Vergleichsbeispiel D mit zusätzlich 15 g 25 %iger wäßriger Ammoniaklösung während dem Mischvorgang besprüht und anschließend bei konstantem Druck und einer konstanten Presszeit von 10 min zu Platten verpreßt. Die Expansion der Platten nach dem Pressvorgang konnte bei gleichzeitiger Verbesserung der Biegefestigkeit, Erhalt der Isolierwirkung und thermischen Stabilität erheblich verringert werden.

In der Tabelle 5 sind die Meßergebnisse des Vergleichsbeispiels D und des Beispiels 9 aufgeführt.

Tabelle 5

| Beispiel | Behandlung | Lösung %ig $NH_3$ | Pressdruck bar | Bruchfestigkeit N | Standardabweichung | Expansion % | Schrumpfung in % Durchm. | Höhe | Volumen |
|---|---|---|---|---|---|---|---|---|---|
| 63 % A 380 | unbehandelt | - | 13,5 | 140,2 | 136,9 ± 6,3 | 6,5 | | | |
| 30 % Rutil | | | 13,5 | 135,5 | | 6,5 | | | |
| 7 % Kaowool® | | | 13,5 | 128,7 | | 6,5 | 4,3 | 11,5 | 19,3 |
| | | | 13,5 | 145,5 | | 6,5 | | | |
| D | | | 13,5 | 134,5 | | 6,5 | | | |
| 63 % A 380 | mit 15 g wäßriger Ammoniaklösung besprüht | 25 | 11 | 171,7 | 180,4 ± 12,3 | 1,5 | | | |
| 30 % Rutil | | | 11 | 181,9 | | 1,0 | | | |
| 7 % Kaowool® | | | 11 | 183,9 | | 1,0 | 4,4 | 8,5 | 16,3 |
| | | | 11 | 165,8 | | 1,0 | | | |
| 9 | | | 11 | 197,8 | | 1,5 | | | |

Vergleichsbeispiel E

Man stellt in einem schnellaufenden Mischgerät mit ca. 5 000 UpM aus 53 Gew.-% einer pyrogenen Kieselsäure mit einer BET-Oberfläche von 300 $m^2/g$, 40 Gew.-% eines feinteiligen Trübungsmittels (Quarz) und 7 Gew.-% einer keramischen Faser auf Basis Aluminiumsilikat (60 Gew.-% $Al_2O_3$-Anteil) eine homogene Mischung her. Die Mischung wird zu Platten mit einem Litergewicht von 300 g/l verpreßt.

Beispiel 10

Es werden 300 g einer Wärmedämmaterial-Mischung gemäß Vergleichsbeispiel E mit zusätzlich 40 g 8 %iger wäßriger Harnstofflösung während dem Mischvorgang besprüht. Die Herstellung, Zusammensetzung und Weiterverarbeitung der Dämmstoffmischung erfolgt entsprechend wie im Vergleichsbeispiel E beschrieben. Die Platten werden anschließend bei 120 °C, 2 h getempert. Die Biegefestigkeit der Platten wird um 75 % gegenüber dem Vergleichsbeispiel E verbessert (siehe Tabelle 6).

Beispiel 11

Es werden 300 g einer Wärmedämmaterial-Mischung zusätzlich mit 35 g einer 12 %igen wäßrigen Ammoniaklösung während dem Mischvorgang besprüht und anschließend bei 120 °C, 2 h in geschlossenem Raum getempert. Die Herstellung, Zusammensetzung und Weiterverarbeitung der Dämmstoffmischung erfolgt entsprechend Vergleichsbeispiel E.

Die Biegefestigkeit der Platten wird um ca. 90 % verbessert (siehe Tabelle 6).

Beispiel 12

Es werden 300 g einer Wärmedämmaterial-Mischung mit zusätzlich 40 g 7 %igen ammoniakstabilisiertem Kieselsäuresol während dem Mischvorgang besprüht. Die Herstellung, Zusammensetzung und Weiterverarbeitung der Dämmstoffmischung erfolgt entsprechend Vergleichsbeispiel E. Die Platten werden anschließend bei 120 °C, 2 h getempert. Die Biegefestigkeit der Platten wird um ca. 55 % gegenüber dem Vergleichsbeispiel E verbessert (siehe Tabelle 6).

(Siehe Tabelle 6 Seite 15 f.)

Tabelle 6

| Beispiel | Behandlung | Lösung %ig $NH_3$ | Pressdruck bar | Biegefestigkeit N | Schrumpfung in % Durchm. | Höhe | Volumen |
|---|---|---|---|---|---|---|---|
| 53 % A 300 40 % Quarzmehl 7 % Kaowool® E | unbehandelt | - | 11 | 63 | 2,0 | 5,0 | 9,0 |
| | | | 11 | 80 | 2,3 | 6,0 | 10,0 |
| | | | 11 | 76 | 2,5 | 6,5 | 11,0 |
| | | | 11 | 84 | 3,0 | 6,5 | 11,5 |
| | | | 11 | 80 | 2,0 | 5,0 | 9,0 |
| | | | 11 | 82 | 3,5 | 6,5 | 12,0 |
| | | | 11 | 87 | 2,5 | 7,0 | 11,5 |
| | | | 11 | 65 | | | |
| | | | 11 | 84 | | | |
| | | | 11 | 70 | | | |
| 53 % A 300 40 % Quarzmehl 7 % Kaowool® 10 | mit 40 g 8 %iger Harnstofflösung besprüht | 8 | 8,5 | 140 | - | - | - |
| 53 % A 300 40 % Quarzmehl 7 % Kaowool® (300 g) 11 | mit 35 g wäßriger Ammoniaklösung besprüht | 12 | 8,5 | 173 | 2,0 | 3,0 | 6,5 |
| | | | 8,5 | 160 | 2,0 | 4,0 | 8,0 |
| | | | 8,5 | 125 | 2,0 | 3,0 | 6,5 |
| | | | 8,5 | 156 | | | |
| 53 % A 300 40 % Quarzmehl 7 % Kaowool® (300 g) 12 | mit 40 g ammoniakstabilisiertem Kieselsäuresol besprüht | 7 | 8,5 | 131 | 2 | 3,5 | 7,0 |
| | | | 8,5 | 131 | 2 | 4,5 | 8,0 |
| | | | 8 5 | 124 | | | |
| | | | 8 5 | 125 | | | |

Beispiel 13

Es wird ein Dämmstoff wie in der Offenlegungsschrift DE-A 29 42 087 beschrieben hergestellt. Zur Herstellung des Wärmedämmstoffkörpers wird zunächst das Vorgemisch, bestehend aus dem Bindemittel und dem Dispergiermittel hergestellt. Das Gemisch besteht aus 10 % hydrophobierter Kieselsäure und 90 % Soda. Das Gemisch wird in einer Kugelmühle auf eine Korngröße unter 1 µm gemahlen. Anschließend wird die Dämmstoffmischung, bestehend aus 53 Gew.-% pyrogener Kieselsäure mit einer BET-Oberfläche von 300 $m^2$/g, 30 Gew.-% eines feinteiligen Trübungsmittels (Rutil), 5 Gew.-% einer keramischen Faser auf Basis Aluminiumsilikat (60 Gew.-% $Al_2O_3$-Anteil) mit 10 Gew.-% Bindergemisch hergestellt. Die Mischung wird zu Platten mit einem Litergewicht von 300 g/l verpreßt. Die Wärmedämmformteile werden bei einer Temperatureinwirkung von 600 °C und einer Verweildauer von 20 min ausgehärtet. Die Druckfestigkeit konnte zwar verbessert werden, jedoch nicht die Biegefestigkeit. Die Temperaturstabilität wird von 950 °C auf 600 °C herabgesetzt. Die gute Isolierwirkung der Dämmstoffmischung geht bei Anwendungstemperaturen von 600 °C verloren, weil die Proße zerstört wird.

Wärmeleitfähigkeit im Bereich 20 bis 1 000 °C von 55 % A 300 ; 30 % Rutil, 5 % Kaowool, 10 % Soda/R 972

Beispiel 13

| Aussentemp. °C | Innentemp. °C | Mittel.Temp. °C | Rel.Wlf. W/K | Absol.Wlf. W/M*K | Z-BE HHMMSS |
|---|---|---|---|---|---|
| 22 | 84 | 53 | 0213 | 0284 | 012345 |
| 23 | 213 | 118 | 0192 | 0256 | 020939 |
| 25 | 308 | 167 | 0189 | 0252 | 024437 |
| 27 | 402 | 215 | 019 | 0254 | 032054 |
| 29 | 495 | 262 | 0193 | 0258 | 035521 |
| 32 | 592 | 312 | 0207 | 0276 | 043300 |
| 34 | 688 | 361 | 0233 | 0311 | 051314 |
| 43 | 784 | 414 | 0328 | 0437 | 063214 |
| 64 | 881 | 473 | 0591 | 0789 | 081254 |
| 67 | 1013 | 540 | 0963 | 1284 | 082329 |
| 83 | 884 | 483 | 0843 | 1124 | 091947 |
| 81 | 785 | 433 | 0777 | 1036 | 101216 |
| 74 | 687 | 381 | 0719 | 0959 | 111933 |
| 68 | 597 | 333 | 0645 | 086 | 120352 |
| 62 | 509 | 285 | 0597 | 0796 | 124646 |
| 56 | 418 | 237 | 0526 | 0702 | 132055 |
| 49 | 324 | 186 | 0461 | 0615 | 120531 |
| 39 | 226 | 133 | 0396 | 0529 | 150727 |
| 29 | 92 | 60 | 0345 | 0461 | 173458 |

Die graphische Darstellung dieser Werte zeigt Figur 10.

Beispiel 14

Man stellt in einem schnellaufenden Mischgerät mit ca. 5 000 UpM aus 63 Gew.-% einer pyrogenen Kieselsäure mit einer BET-Oberfläche von 300 $m^2$/g, 30 Gew.-% eines feinteiligen Trübungsmittels (Rutil) und 7 Gew.-% einer keramischen Faser auf Basis Aluminiumsilikat (60 Gew.-% $Al_2O_3$-Anteil) eine homogene Wärmedämmaterial-Mischung von insgesamt 300 g her. Anschließend wird die Wärmedämmaterial-Mischung mit einem 25 %igen Ammoniak-Wasser-Dampfgemisch behandelt. Die Wärmedämmaterial-Mischung wird zu Platten mit einem Litergewicht von 300 g/l verpreßt. Die Expansion der Platten nach dem Pressvorgang (10 min) konnte bei gleichzeitiger Verbesserung der Biegefestigkeit, Erhalt der thermischen Stabilität und unwesentlicher Änderung der Isolierwirkung erheblich verringert werden.

In der Tabelle 7 sind die Meßergebnisse für das Beispiel 14 aufgeführt.

Tabelle 7

| Beispiel | Behandlung | Pressdruck bar 10 min. | Expansion % | Biege-festig-keit N | Standard-abweichung | Schrumpfung (5) bei 1000°C Durchmesser | Höhe | Volumen |
|---|---|---|---|---|---|---|---|---|
| 63 % A 300 | mit 25%igem | 11 | 3 | 230,0 | | | | |
| 30 % Rutil | Ammoniak- | 11 | 3 | 232,7 | | | | |
| 7 % Kaowool® | Wasser- | 11 | 3 | 226,8 | 235,2± 7,6 | 3,2 | 7,9 | 14,8 |
| | Dampfgemisch | 11 | 3 | 242,9 | | | | |
| (300 g) | behandelt | 11 | 3 | 243,4 | | | | |

Wärmeleitfähigkeit im Bereich 20 bis 1 000 °C von Standardmischung mit 15 ml Ammoniak bedämpft bei 100 °C

Beispiel 14

| Aussentemp. °C | Innentemp. °C | Mittel.Temp. °C | Rel.Wlf. W/K | Absol. Wlf. W/M*K | Z-BE HHMMSS |
|---|---|---|---|---|---|
| 21 | 86 | 53 | 0203 | 027 | 012302 |
| 22 | 214 | 118 | 0169 | 0225 | 020418 |
| 25 | 309 | 167 | 0164 | 0219 | 024002 |
| 27 | 403 | 215 | 017 | 0227 | 031750 |
| 30 | 500 | 265 | 0181 | 0241 | 035444 |
| 32 | 597 | 315 | 0189 | 0252 | 042537 |
| 37 | 693 | 365 | 0198 | 0265 | 050107 |
| 41 | 789 | 415 | 0211 | 0282 | 053632 |
| 46 | 886 | 466 | 0227 | 0303 | 061145 |
| 51 | 984 | 518 | 0246 | 0328 | 064656 |
| 56 | 901 | 479 | 0223 | 0298 | 072932 |
| 56 | 805 | 431 | 0196 | 0261 | 080138 |
| 53 | 705 | 379 | 0179 | 0239 | 084226 |
| 46 | 605 | 326 | 0174 | 0232 | 093723 |
| 41 | 513 | 277 | 0155 | 0206 | 102849 |
| 36 | 414 | 225 | 0148 | 0197 | 113534 |
| 31 | 319 | 175 | 0144 | 0192 | 125456 |
| 27 | 221 | 124 | 0133 | 0178 | 142939 |
| 20 | 87 | 53 | 0137 | 0182 | 182121 |

Die graphische Darstellung dieser Werte zeigt Figur 11

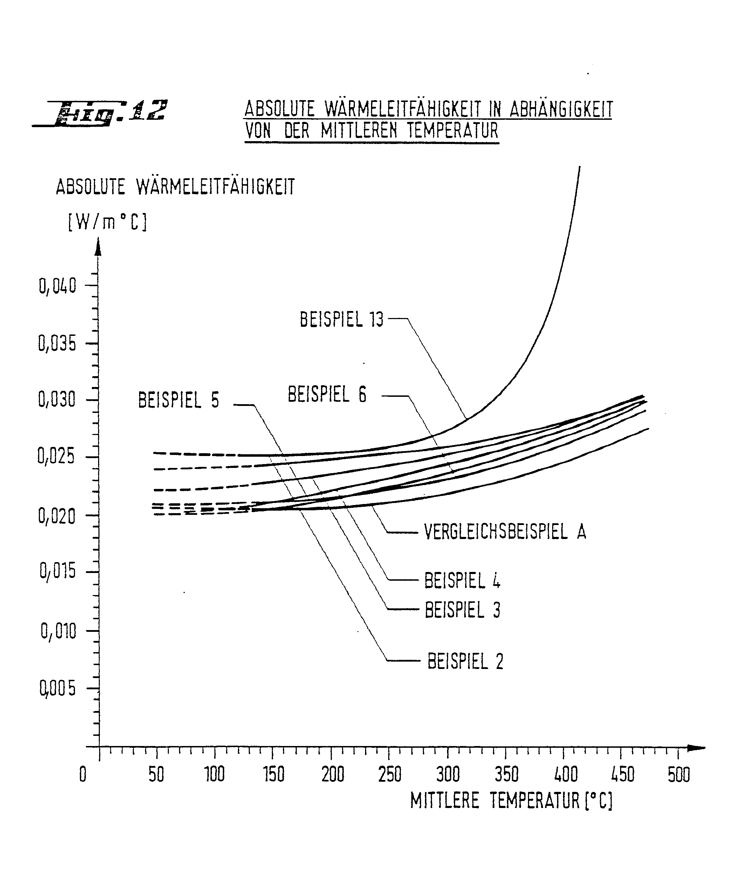

In Figur 12 sind die arithmetisch ermittelten Wärmeleitfähigkeiten in Abhängigkeit von den mittleren Temperaturen für die verschiedenen Wärmedämmsysteme aufgeführt.
Die mittlere Temperatur errechnet sich nach der Gleichung

$$\frac{\text{Innentemperatur} + \text{Aussentemperatur}}{2}$$

Die in den Beispielen genannten Bezeichnungen haben die folgenden Bedeutungen :
1. Aerosil® 300 ist eine pyrogen hergestellte Kieselsäure mit einer BET-Oberfläche von 300 $m^2/g$
2. Aerosil® 380 ist eine pyrogen hergestellte Kieselsäure mit einer BET-Oberfläche von 380 $m^2/g$
3. Kaowool® ist eine keramische Aluminiumsilikatfaser mit 60 Gew.-% $Al_2O_3$- und 40 Gew.-% $SiO_2$-Anteilen.

**Patentansprüche**

1. Verfahren zur Herstellung von bindemittelfreien Wärmedämmformkörpern unter Verwendung von hochdispersen Oxiden von Metallen und/oder Metalloiden, Trübungsmitteln und anorganischen Fasern als Wärmedämmaterial, dadurch gekennzeichnet, daß man das hochdisperse Oxid von Metallen und/oder Metalloiden, Trübungsmittel und anorganische Fasern in Gegenwart von stickstoffhaltigen, in wässriger Lösung basisch reagierenden Stoffen vermischt und diese Wärmedämmaterial-Mischung anschliessend verpreßt.

2. Verfahren nach Anspruch 1, dadurch gekennzeichnet, daß man den stickstoffhaltigen Stoff in Form einer wässrigen Lösung verwendet.

3. Verfahren nach Anspruch 1, dadurch gekennzeichnet, daß man den stickstoffhaltigen Stoff in gasförmigem Zustand in Gegenwart von Wasserdampf verwendet.

**Claims**

1. A process for the production of binder-free heat-insulating mouldings using highly-dispersed oxides of metals and/or metalloids, opacifiers and inorganic fibres as heat-insulating material, characterised in that the highly-dispersed oxide of metals and/or metalloids, opacifier and inorganic fibres are mixed together in the presence of nitrogen-containing materials which react basically in aqueous solution, and the mixture of heat-insulating materials is subsequently compressed.

2. A process according to claim 1, characterised in that the nitrogen-containing material is used in the form of an aqueous solution.

3. A process according to claim 1, characterised in that the nitrogen-containing material is used in a gaseous state in the presence of steam.

**Revendications**

1. Procédé pour la fabrication de corps moulés calorifuges sans liants par utilisation d'oxydes métalliques et/ou de métalloïdes fortement dispersés, d'opacifiants et de fibres minérales en tant que matériau calorifuge, caractérisé en ce que l'on mélange l'oxyde de métaux et/ou de métalloïdes fortement dispersé, des opacifiants et des fibres minérales en présence de substances azotées, à réaction basique en solution aqueuse, et que l'on comprime ensuite ce mélange de matériaux calorifuges.

2. Procédé selon la revendication 1, caractérisé en ce que la substance azotée est utilisée sous forme d'une solution aqueuse.

3. Procédé selon la revendication 1, caractérisé en ce que la substance azotée est utilisée à l'état gazeux en présence de vapeur d'eau.

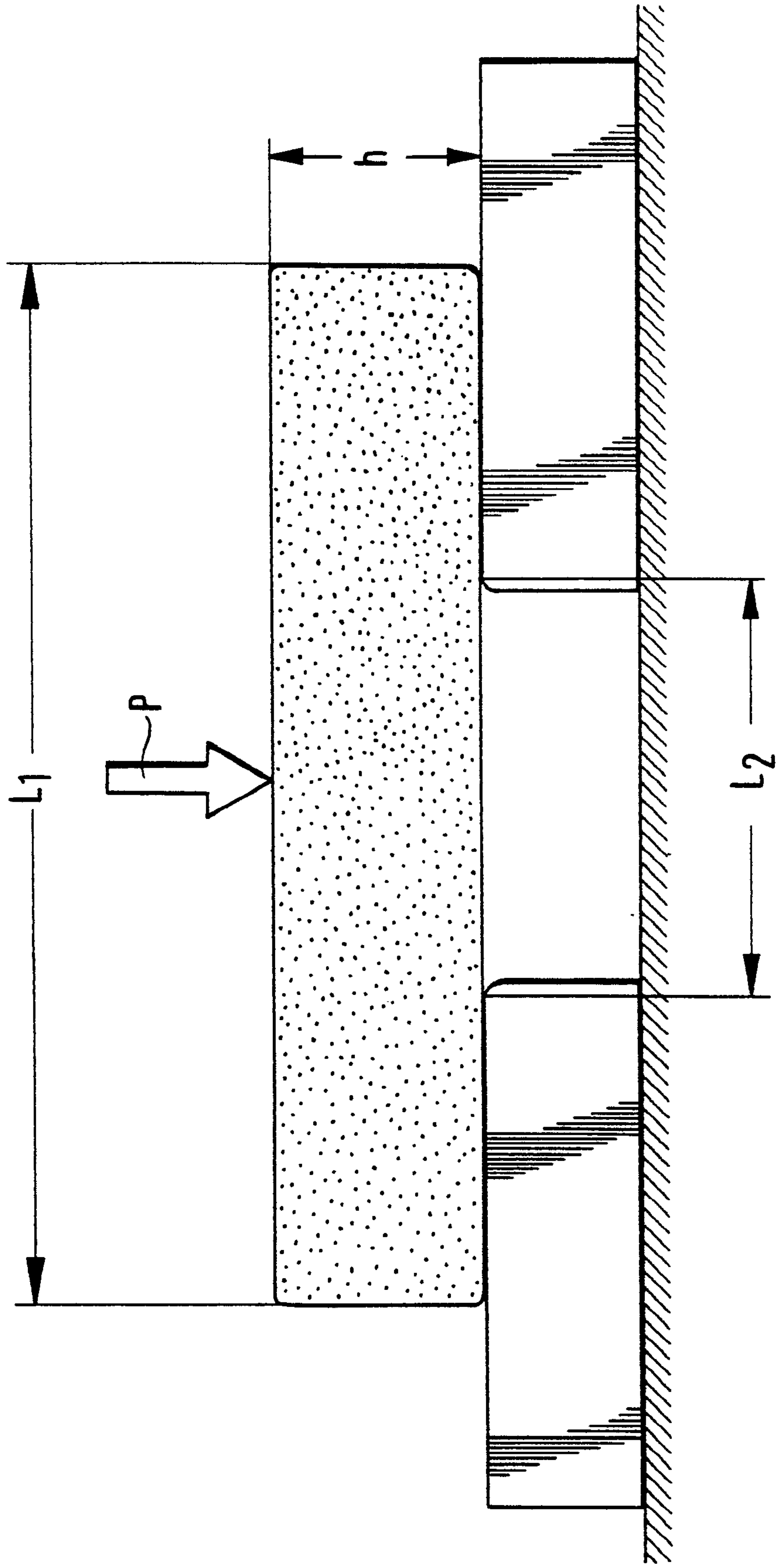


Fig. 1

Fig. 2 WÄRMELEITFÄHIGKEIT ALS FUNKTION DER MITTLEREN TEMPERATUR

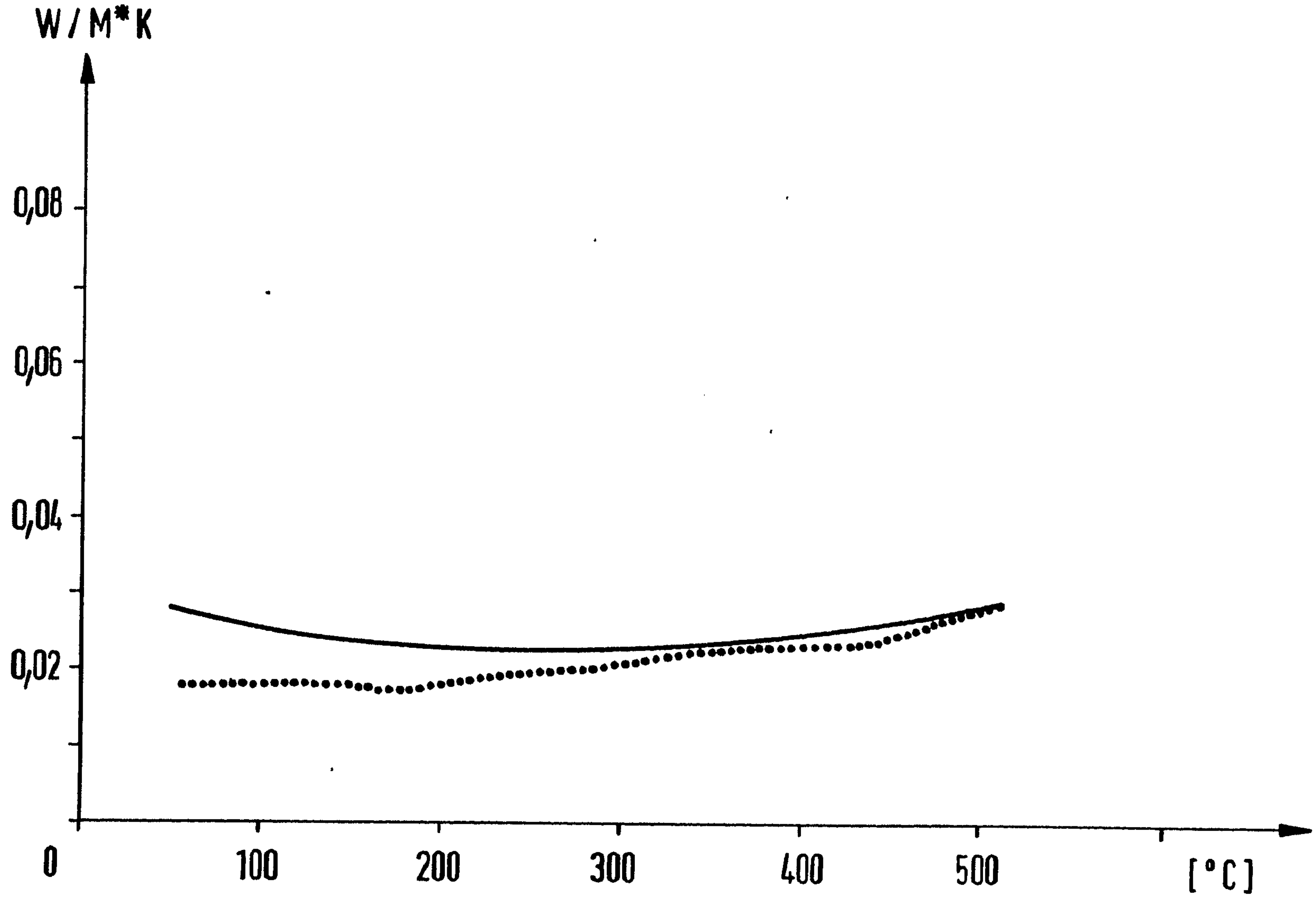

Fig. 3 WÄRMELEITFÄHIGKEIT ALS FUNKTION DER MITTLEREN TEMPERATUR

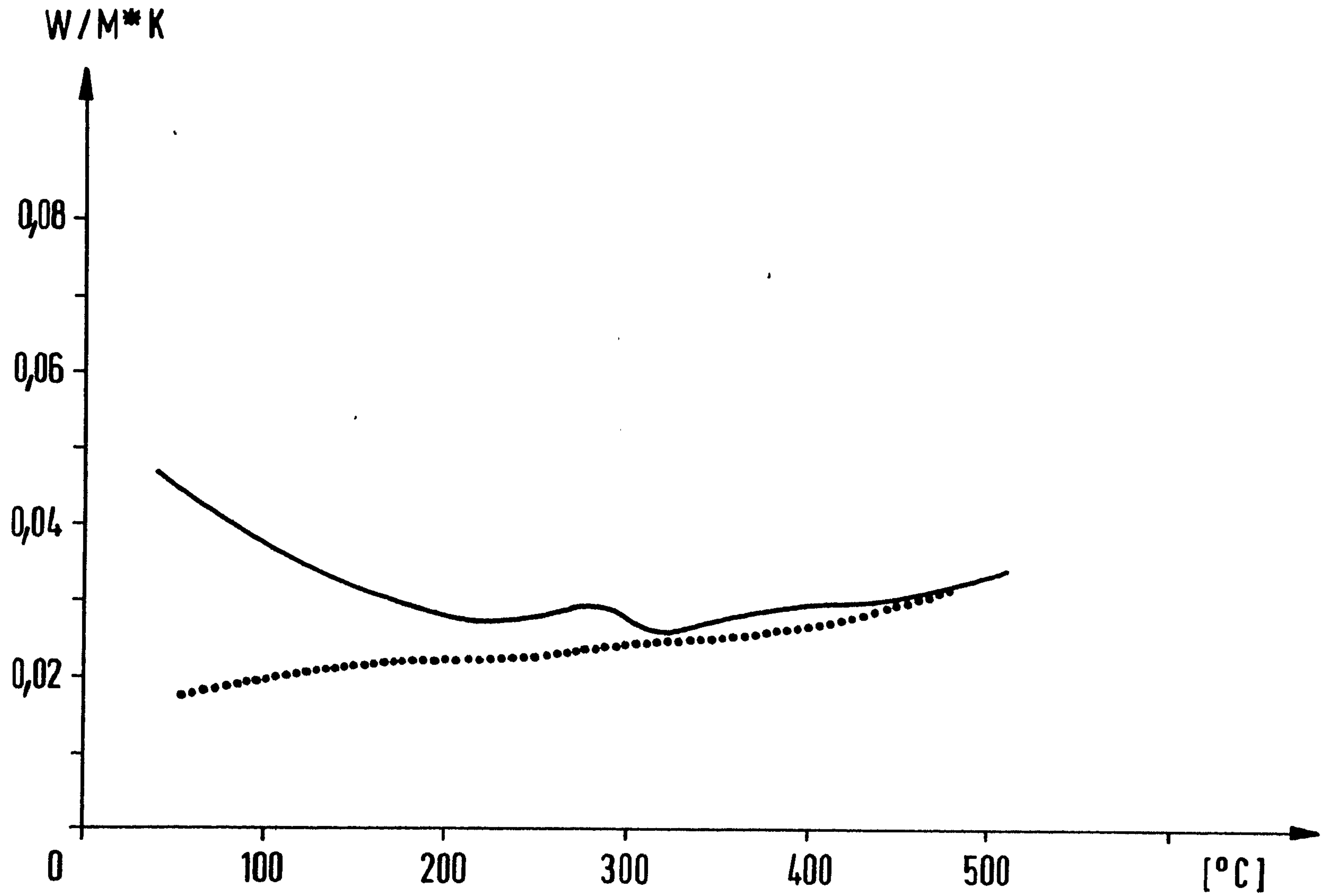

Fig. 4 WÄRMELEITFÄHIGKEIT ALS FUNKTION DER MITTLEREN TEMPERATUR

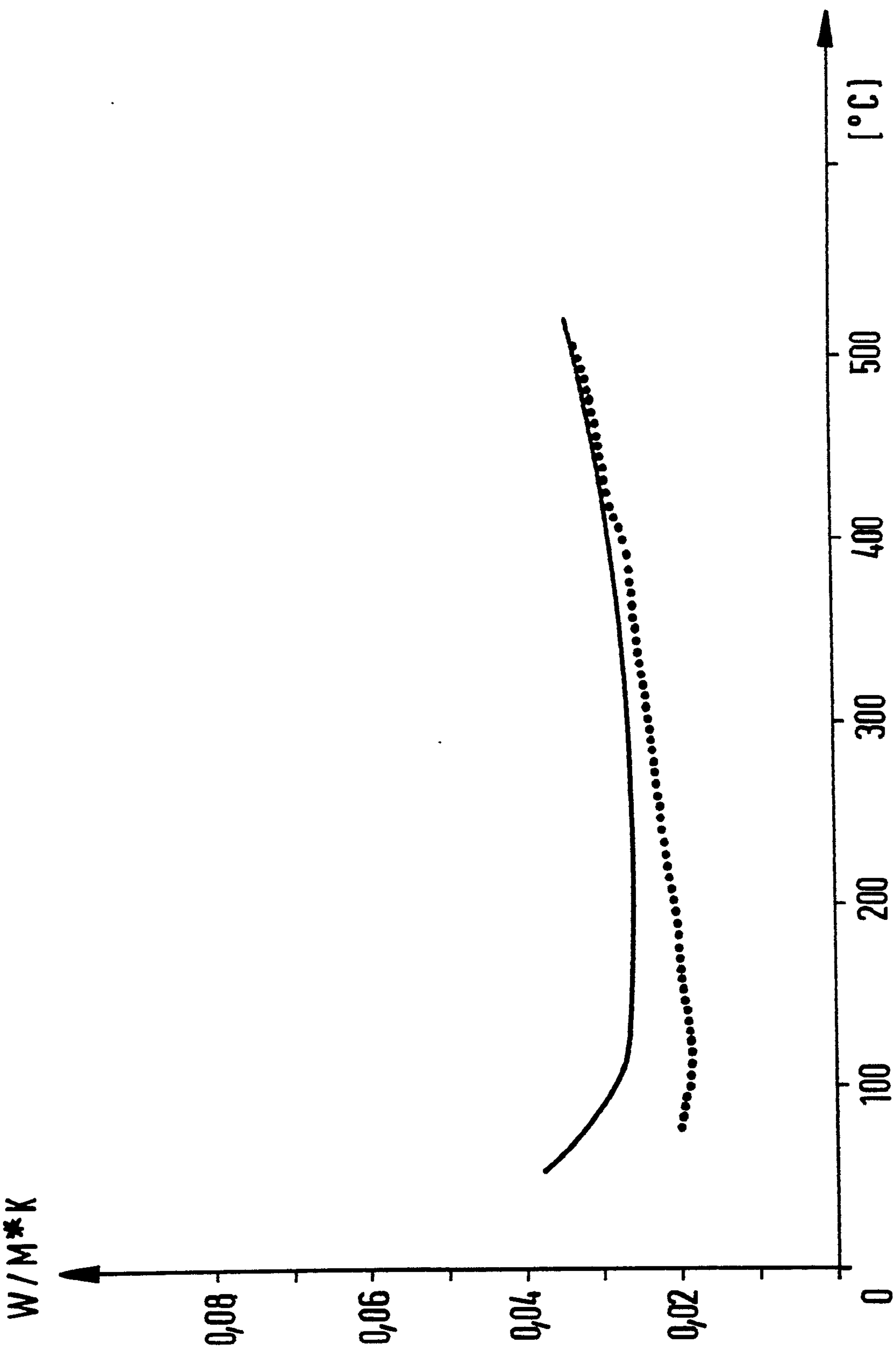

Fig. 5 WÄRMELEITFÄHIGKEIT ALS FUNKTION DER MITTLEREN TEMPERATUR

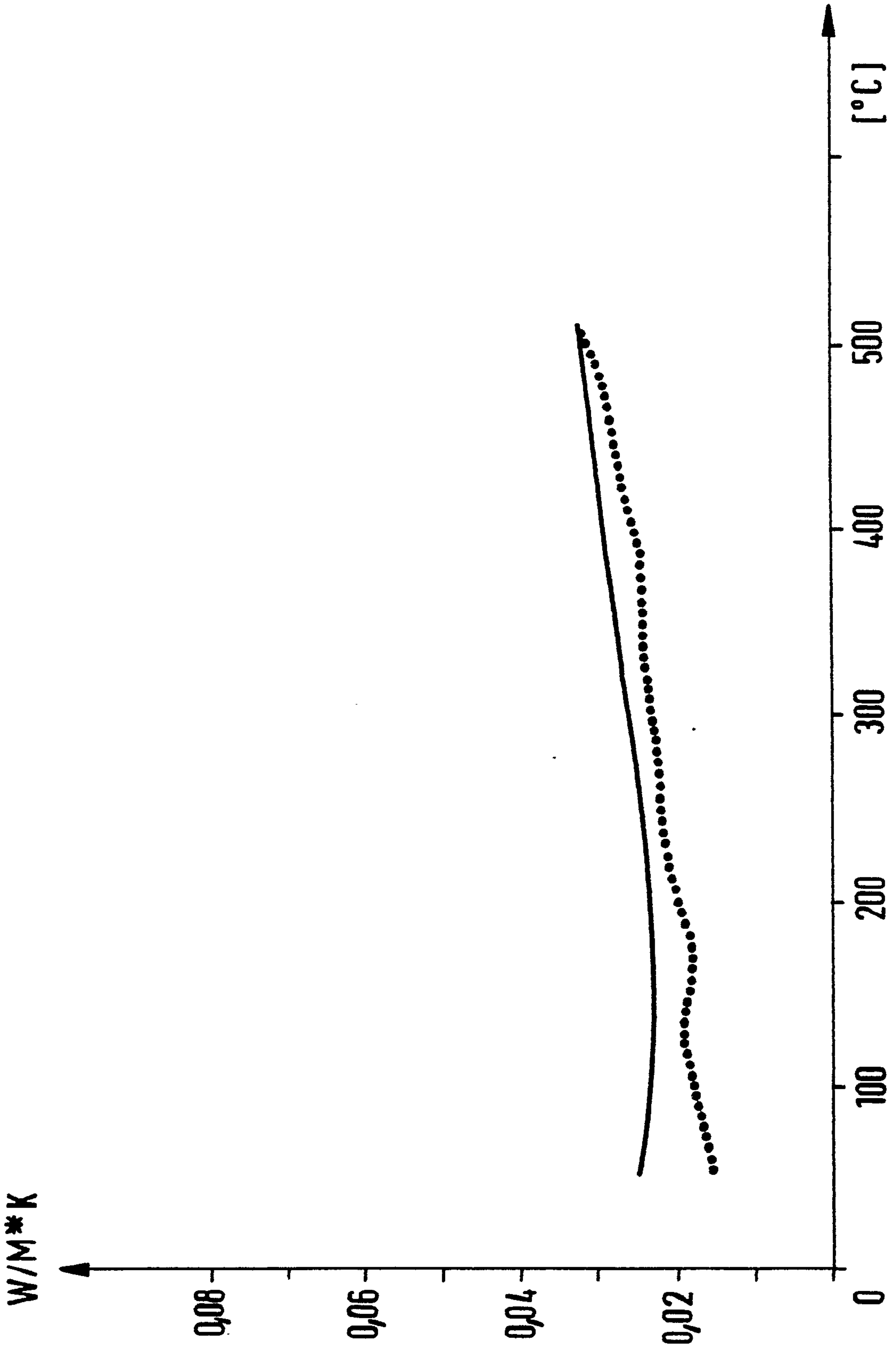

**Fig. 6** WÄRMELEITFÄHIGKEIT ALS FUNKTION DER MITTLEREN TEMPERATUR

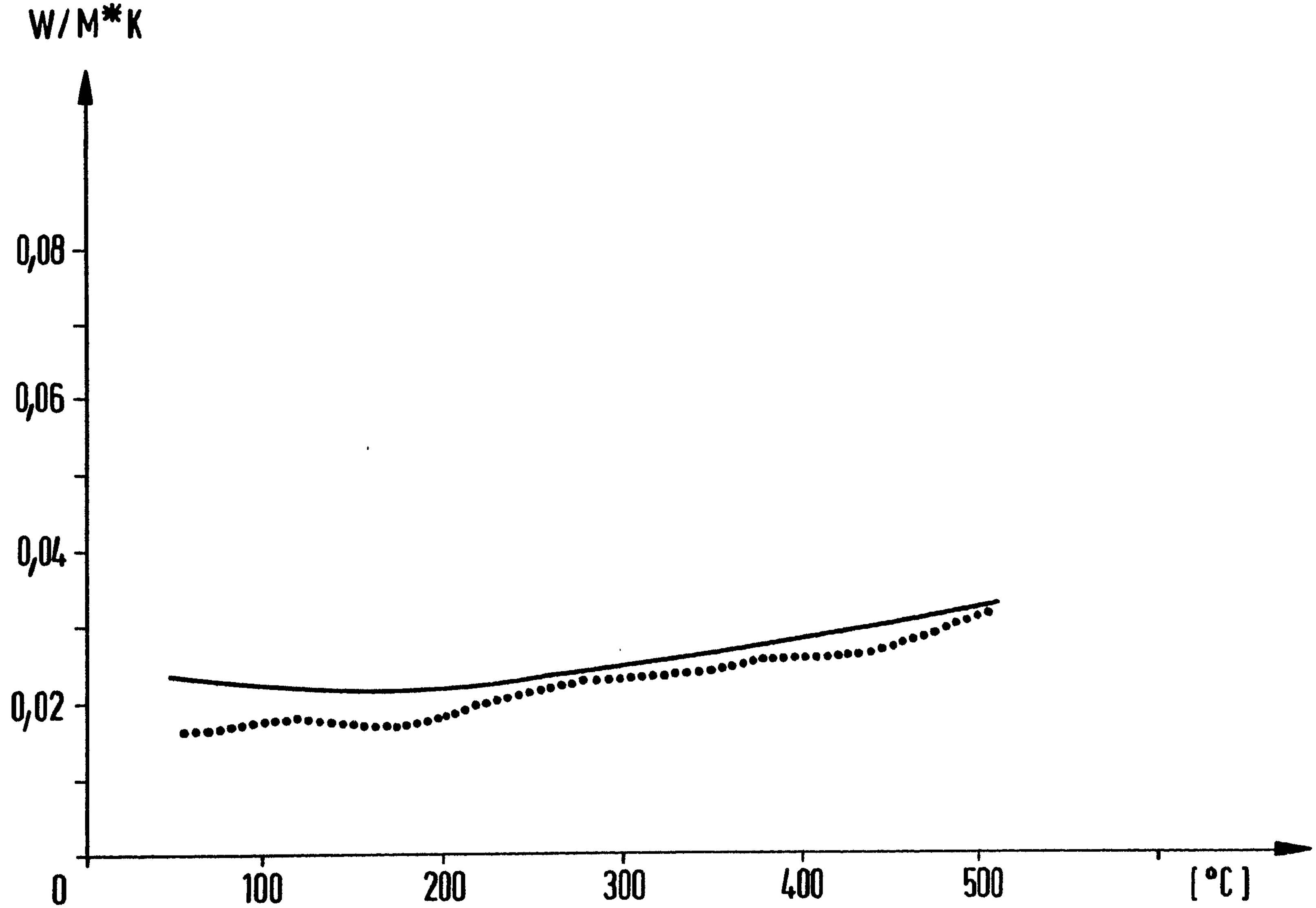

Fig. 7 WÄRMELEITFÄHIGKEIT ALS FUNKTION DER MITTLEREN TEMPERATUR

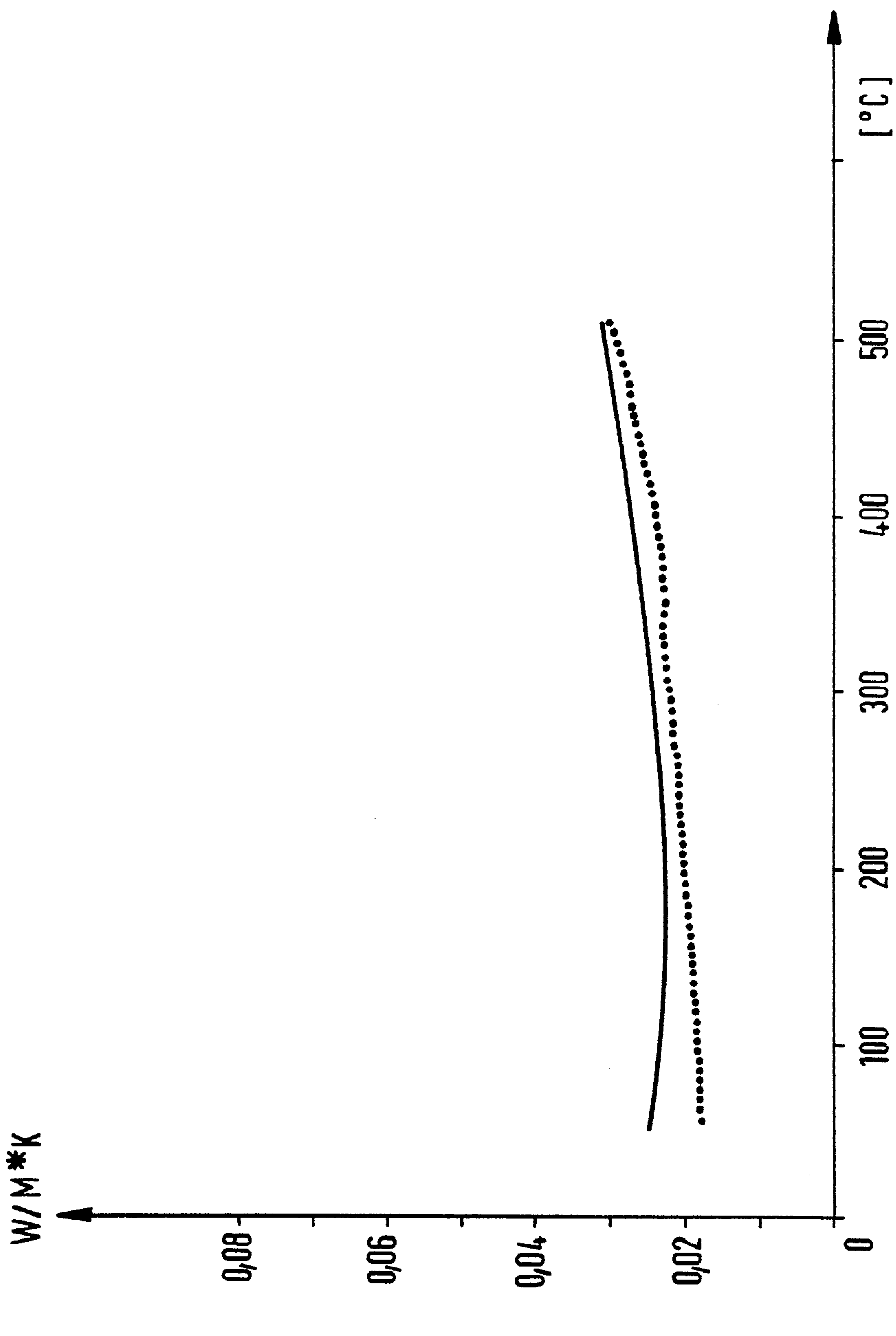

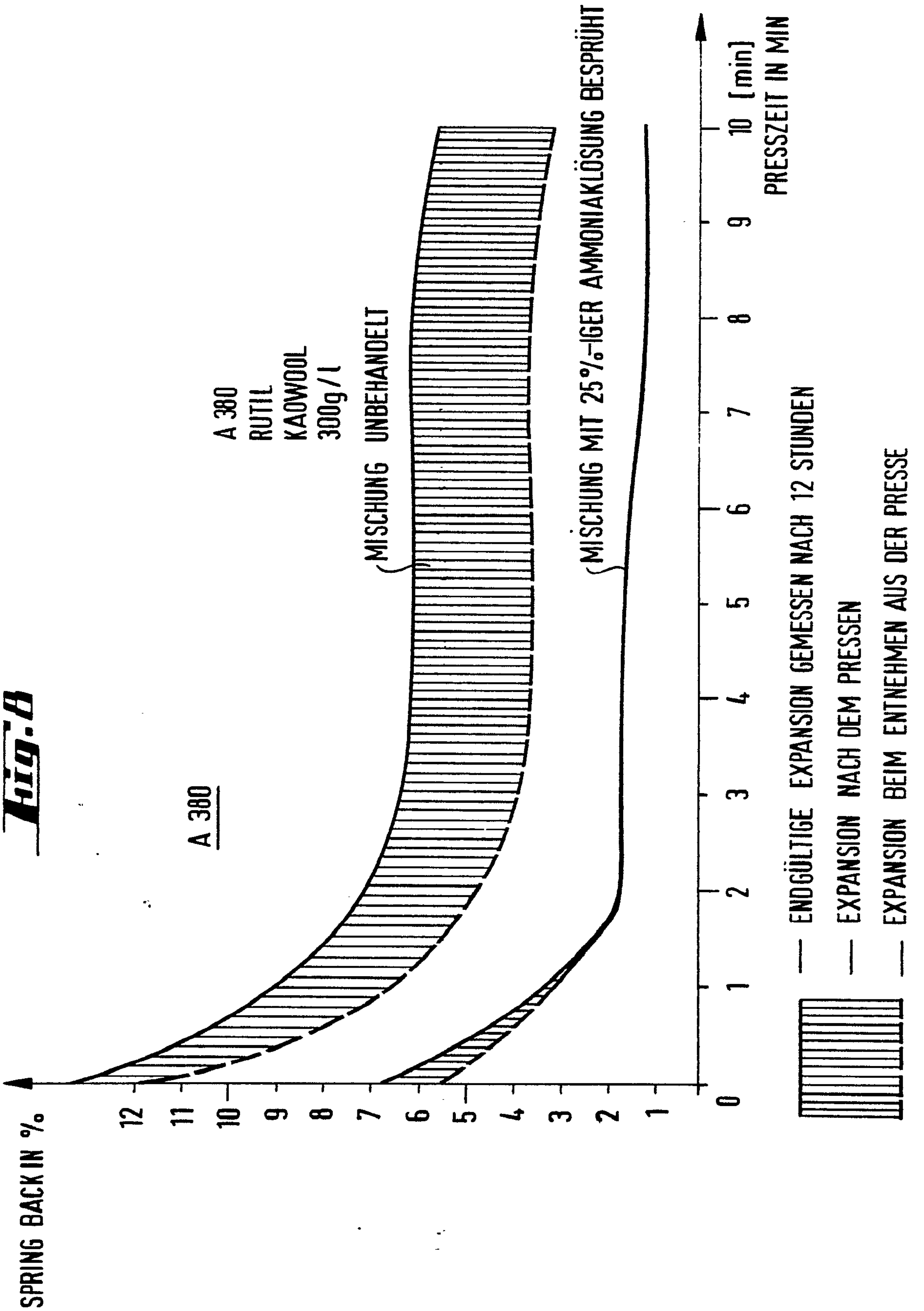
SPRING BACK IN %
12
11
10
9
8
7
6
5
4
3
2
1
0
A 380
A 380
RUTIL
KAOWOOL
300g/l
MISCHUNG UNBEHANDELT
MISCHUNG MIT 25%-IGER AMMONIAKLÖSUNG BESPRÜHT
1
2
3
4
5
6
7
8
9
10 [min]
PRESSZEIT IN MIN
— ENDGÜLTIGE EXPANSION GEMESSEN NACH 12 STUNDEN
— EXPANSION NACH DEM PRESSEN
— EXPANSION BEIM ENTNEHMEN AUS DER PRESSE

Fig. 8

Fig. 9

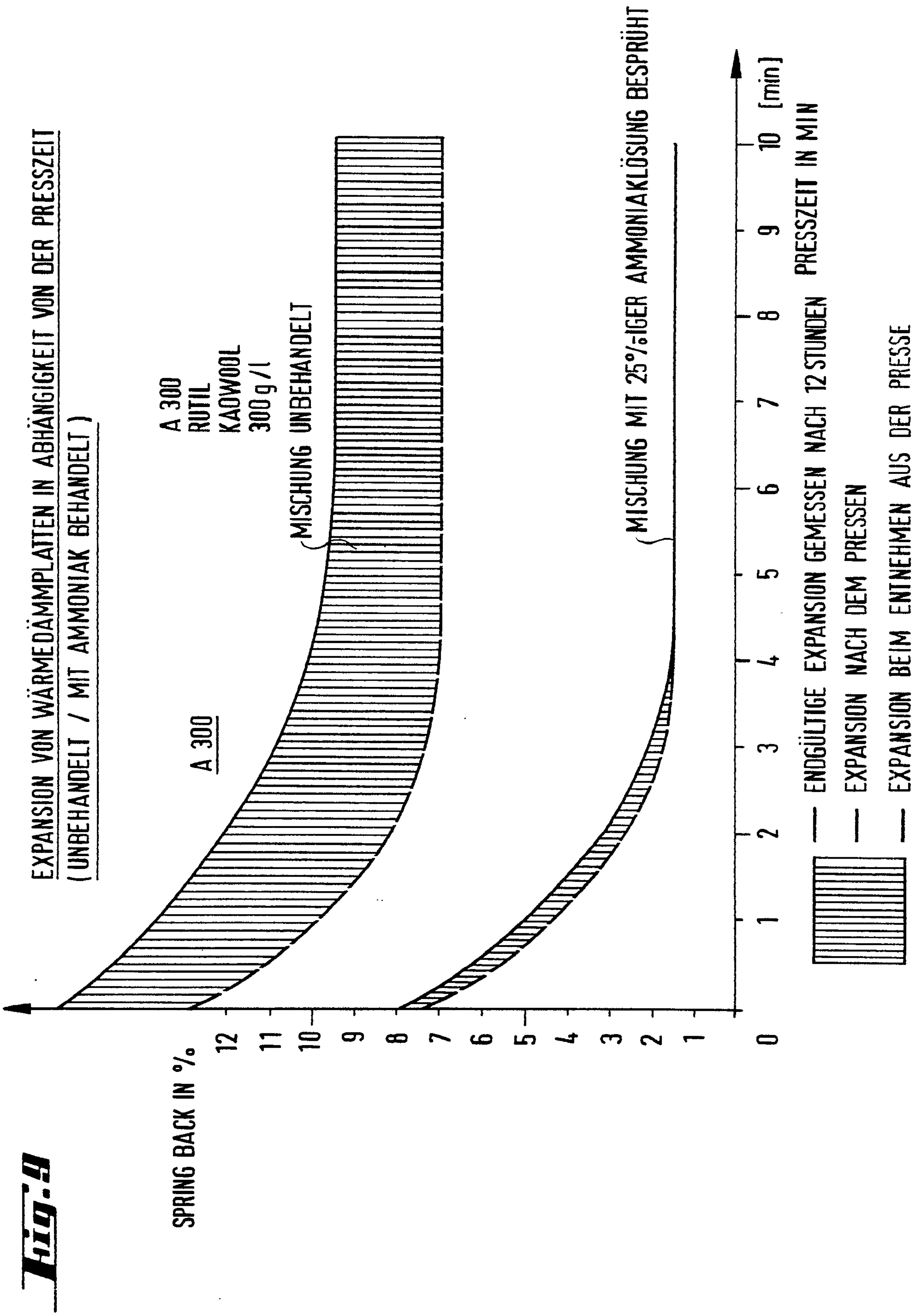
EXPANSION VON WÄRMEDÄMMPLATTEN IN ABHÄNGIGKEIT VON DER PRESSZEIT
(UNBEHANDELT / MIT AMMONIAK BEHANDELT)
A 300
A 300
RUTIL
KAOWOOL
300 g / l
MISCHUNG UNBEHANDELT
MISCHUNG MIT 25%IGER AMMONIAKLÖSUNG BESPRÜHT
SPRING BACK IN %
0
1
2
3
4
5
6
7
8
9
10
11
12
1
2
3
4
5
6
7
8
9
10
[min]
PRESSZEIT IN MIN
ENDGÜLTIGE EXPANSION GEMESSEN NACH 12 STUNDEN
EXPANSION NACH DEM PRESSEN
EXPANSION BEIM ENTNEHMEN AUS DER PRESSE

Fig. 10 WÄRMELEITFÄHIGKEIT ALS FUNKTION DER MITTLEREN TEMPERATUR

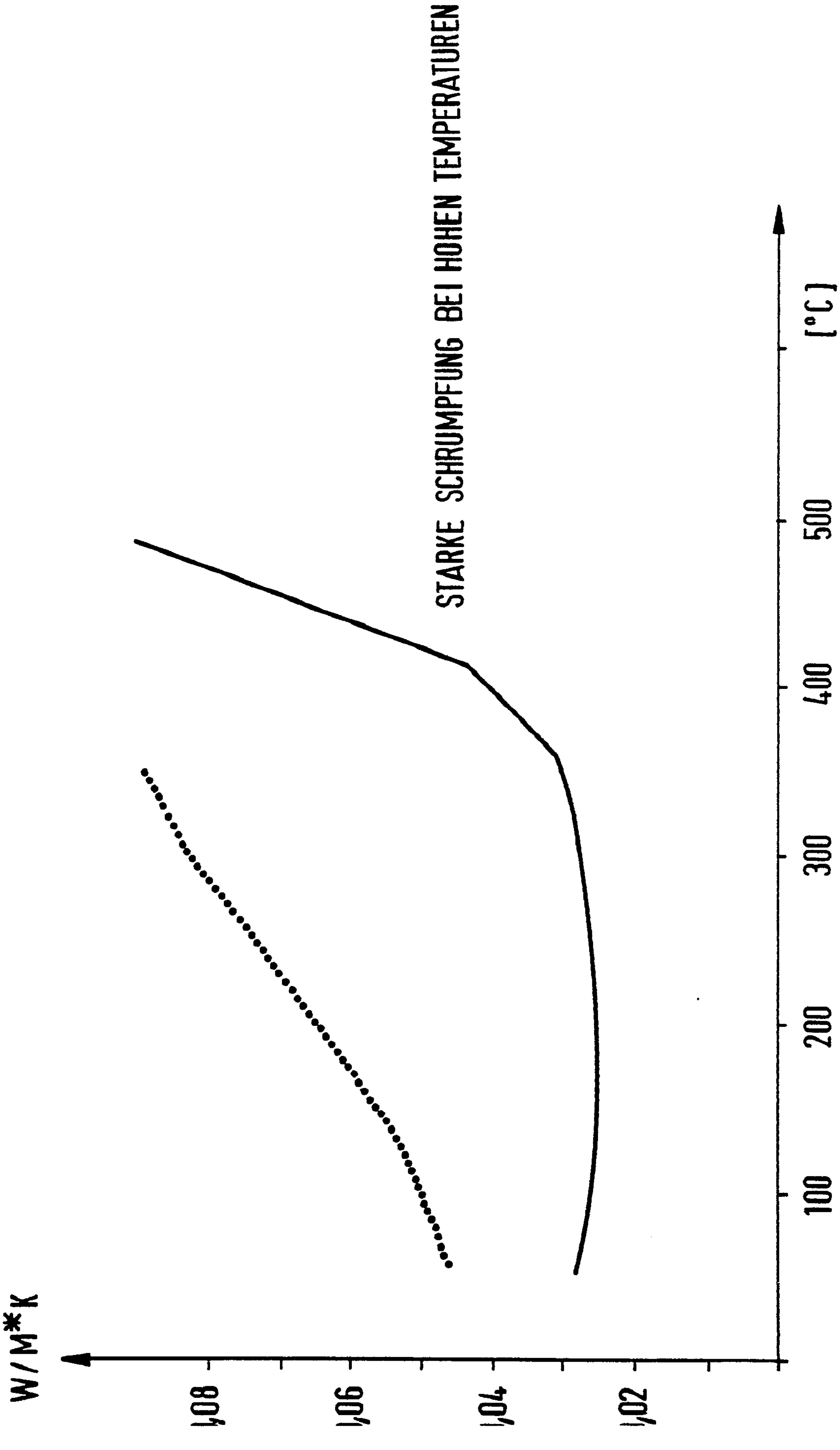

Fig. 11 WÄRMELEITFÄHIGKEIT ALS FUNKTION DER MITTLEREN TEMPERATUR

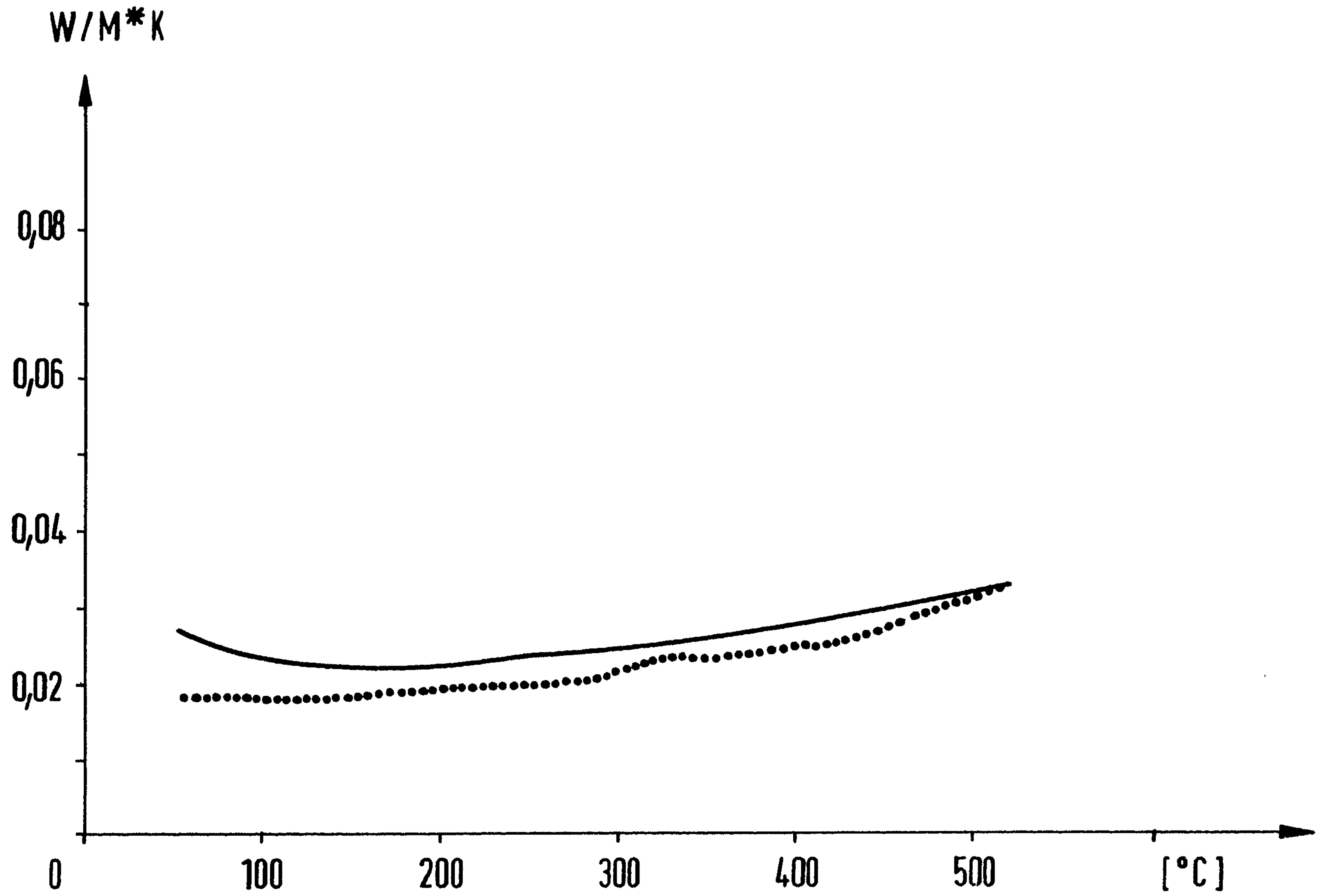

Fig. 12

ABSOLUTE WÄRMELEITFÄHIGKEIT IN ABHÄNGIGKEIT VON DER MITTLEREN TEMPERATUR